(19) Europäisches Patentamt / European Patent Office / Office européen des brevets

(11) **EP 4 024 089 A1**

(12) **DEMANDE DE BREVET EUROPEEN**

(43) Date de publication:
**06.07.2022 Bulletin 2022/27**

(21) Numéro de dépôt: **21218224.0**

(22) Date de dépôt: **29.12.2021**

(51) Classification Internationale des Brevets (IPC):
**$G01S\ 19/21$** (2010.01)   **$G01S\ 5/02$** (2010.01)
**$G01S\ 5/06$** (2006.01)

(52) Classification Coopérative des Brevets (CPC):
**G01S 19/215; G01S 5/0249; G01S 5/06;**
G01S 19/14; G01S 19/15

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **30.12.2020 FR 2014241**

(71) Demandeurs:
• **THALES**
**92400 Courbevoie (FR)**

• **Institut Mines Telecom**
**91120 Palaiseau (FR)**

(72) Inventeurs:
• **HEURGUIER, Dominique**
**92622 GENNEVILLIERS Cedex (FR)**
• **SAMAMA, Nel**
**91000 EVRY (FR)**
• **VERVISCH-PICOIS, Alexandre**
**91120 PALAISEAU (FR)**

(74) Mandataire: **Marks & Clerk France**
**Immeuble "Visium"**
**22, avenue Aristide Briand**
**94117 Arcueil Cedex (FR)**

(54) **PROCÉDÉ POUR LA DÉTERMINATION DE LA POSITION D'UN LEURRE À PARTIR D'AU MOINS UN RÉCEPTEUR**

(57) L'invention concerne un procédé pour la détermination de la position d'un leurre (102) à partir d'au moins un récepteur ($103_1$,... 103j, ...$103_N$). Le procédé comprenant une étape de détection (E3) d'une attaque par leurre (102), une étape de correction (E5) du biais d'horloge délivré par le récepteur ($103_1$,... 103j, ...$103_N$) à partir d'une dérive estimée ($D_j$) de l'horloge du récepteur. Le procédé comprend une étape de mesures différentielles (E6) à partir d'au moins trois biais d'horloge corrigés ($CB_{jcorr}(t")$, $CB_{kcorr}(t")$, $CB_{lcorr}(t")$) et une étape de localisation pour déterminer la position du leurre (102).

[Fig.5]

Fig.5

EP 4 024 089 A1

**Description**

Domaine technique

La présente invention concerne le domaine des systèmes de radionavigation par satellite, connus également sous le nom de systèmes GNSS (pour Global Navigation Satellite System en anglais). On connait par exemple le système américain GPS (pour Global Positioning System en anglais) et le système européen GALILEO.

Technique antérieure

Pour réaliser un calcul de position à partir de signaux GNSS, un récepteur doit implémenter un certain nombre de traitements complexes. Par « récepteur », on entend un appareil qui reçoit et met en forme des signaux transmis par des ondes. De tels récepteurs sont, par exemple, utilisés dans des véhicules automobiles comme un récepteur GPS pour assister le conducteur ou pour gérer totalement le déplacement du véhicule dans le cas d'un véhicule automobile autonome.

Ainsi, un mauvais traitement du signal reçu ou la réception d'un signal malveillant peut avoir des conséquences importantes pour la sécurité du conducteur du véhicule ou du piéton. Or dans le domaine des systèmes de radionavigation par satellite, une attaque par leurre est possible. L'objectif d'une telle attaque par leurre est de remplacer le système de radionavigation de référence par un autre système factice maitrisé par la personne malveillante. Ainsi du point de vue du récepteur, le système factice aura le même degré de confiance que le système de référence. Dès lors, il suffira à la personne malveillante de transmettre des signaux représentatifs de ceux émis par le système de référence mais contenant des données erronées visant à corrompre l'ensemble de la chaine de traitement du signal, par exemple, en faussant les informations PVT (pour Position, Velocity and Time en anglais) délivrées par le récepteur. Différents types d'attaques par leurre sont possibles. Ainsi, dans un premier type d'attaque par leurre des leurres cohérents sont utilisés. Ces leurres sont notamment capables de duper un éventuel dispositif de surveillance autonome de l'intégrité du récepteur ou RAIM (pour Receiver Autonomous Integrity Monitoring en anglais), par exemple, par brouillage de la cible avant le lancement de faux signaux ou par génération de faux signaux de faible puissance puis ensuite par augmentation de la puissance jusqu'à être légèrement supérieur aux vrais signaux. Un deuxième type d'attaque par leurre se base sur une attaque par répétition, par exemple, par enregistrement et répétition des vrais signaux (attaque par « meaconing »). Un troisième type d'attaque par leurre est une attaque avancée, par exemple, par la génération de signaux de leurre et de signaux d'annulation (attaque par « nulling ») ou par l'envoi de signaux en provenance de plusieurs directions (attaque multi-antennes).

Le document FR2992069 divulgue une solution pour contrer les attaques par leurre en utilisant des signaux sécurisés notamment par cryptographie. Des traitements complémentaires sont alors nécessaires. Ces traitements sont déportés dans des stations de référence offrant des capacités renforcées de protection des traitements et de correction des mesures. Cependant, Ces traitements augmentent globalement la complexité et le coût des récepteurs. En outre, la solution divulguée dans ce document ne permet pas de détecter la position du leurre pour traiter efficacement une attaque dès sa source.

Il existe donc un besoin d'améliorer la détermination de la position d'un leurre pour mettre fin à tout risque d'attaque supplémentaire, et ceci de manière simple et pratique.

Exposé de l'invention

La présente invention vise à remédier au moins en partie à ce besoin.

Plus particulièrement, la présente invention vise à améliorer la détermination de la position d'un leurre dans le domaine des systèmes de radionavigation par satellite.

Un premier objet de l'invention concerne un procédé pour la détermination de la position d'un leurre à partir d'au moins un récepteur, ledit récepteur étant adapté pour recevoir des signaux provenant de satellites d'un système de radionavigation GNSS. Le récepteur et le système de radionavigation GNSS ont chacun une horloge dite respectivement horloge du récepteur et horloge de référence, ladite horloge du récepteur et ladite horloge de référence présentant une différence temporelle à un instant t dite biais d'horloge de référence. L'horloge du récepteur dérive dans le temps par rapport à l'horloge de référence. Le procédé comprend une étape de détection d'une attaque par leurre, une étape de correction du biais d'horloge délivré par le récepteur à un instant t'', dit biais d'horloge corrigé, ladite correction étant réalisée à partir d'une dérive estimée de l'horloge du récepteur. Le procédé comprend une étape de mesures différentielles à partir d'au moins trois biais d'horloge corrigés pour déterminer la position du leurre.

Ainsi, l'invention propose une technique de localisation d'un leurre GNSS à partir de seules informations provenant de signaux reçus par un ou plusieurs récepteurs. Cette technique est basée sur l'estimation d'une différence temporelle, dite biais d'horloge, entre une horloge du récepteur et une horloge de l'émetteur, que cet émetteur soit un satellite d'un système de radionavigation GNSS authentique ou un leurre. L'horloge d'un récepteur ou l'horloge d'un satellite est un dispositif interne permettant d'obtenir une référence de temps. Pour un satellite, l'horloge utilisée est, par exemple, une horloge atomique. Une horloge atomique utilise la pérennité et l'immuabilité de la fréquence du rayonnement électromagnétique émis par un électron lors du passage d'un niveau d'énergie à un autre pour assurer l'exactitude et la stabilité du signal oscillant qu'elle produit. Cette horloge atomique présente une très grande fiabilité. De plus, les horloges des différents satellites sont synchronisées afin de partager une référence de temps commune à la constellation de satellites formant le système de radionavigation GNSS. Pour un récepteur, l'horloge utilisée est une horloge d'une moins grande précision. De plus, la stabilité de cette horloge dans le récepteur est bien inférieure à la stabilité des horloges atomiques utilisées dans les satellites. En effet, l'horloge du récepteur est soumise à un phénomène de dérive significative dans le temps. Dans le cadre d'un système de radionavigation authentique, l'ampleur de ce phénomène de dérive relative de l'horloge du récepteur est déterminable à partir des signaux provenant des satellites. L'invention propose d'estimer une dérive relative de l'horloge du récepteur par rapport à l'horloge du leurre (en phase de leurrage) ou par rapport à l'horloge de référence du système de radionavigation GNSS (en phase préalable au leurrage) à partir de signaux reçus provenant du leurre ou du système de radionavigation. Il est alors possible de prédire, à un instant t" la dérive relative de l'horloge soit par rapport au leurre, soit par rapport au système de référence et d'en déduire un biais d'horloge corrigé entre ledit récepteur et ledit leurre. A partir d'au moins trois biais d'horloge corrigés, une position du leurre est déterminée par des mesures différentielles. Les biais d'horloge corrigés proviennent d'au moins trois mesures successives réalisées par un même récepteur. Dans un autre mode de réalisation, les biais d'horloge corrigés proviennent d'au moins trois récepteurs embarqués sur différentes plateformes adaptées pour échanger des données entre elles.

Dans un mode de réalisation particulier, la position du leurre est obtenue à partir d'un seul récepteur, ledit récepteur étant mobile, et en ce que la dérive estimée est déterminée par rapport à une horloge du leurre.

On modélise le biais (leurre/récepteur) une fois le leurre actif.

Dans un mode de réalisation particulier, le biais d'horloge corrigé correspond à l'équation: $CB_{con}(t") = (\delta s(t") - \delta(t")) - D(t"-t_0) - (-CBe(t_0))$, dans laquelle $\delta_s$ représente une valeur de la dérive de l'horloge du leurre, $\delta$ est la dérive propre de l'horloge du récepteur, D est la dérive estimée de l'horloge récepteur vis-à-vis de l'horloge du leurre à un instant quelconque t">$t_0$, $CBe(t_0)$ est la valeur connue du biais d'horloge délivré par le récepteur à l'instant $t_0$ de début d'une attaque.

Le biais (leurre/récepteur) est modélisé de la manière suivante :
$CB_e(t")=D.(t"-t_0) + CBe(t_0)$ dans lequel $CB_e(t")$ est le biais $\delta_{ts}(t")-\delta(t")$
(récepteur/leurre) estimé à l'instant t', $CBe(t_0)$ est la valeur connue du biais à $t_0$, D est la dérive estimée de l'horloge récepteur vis-à-vis de l'horloge du leurre à un instant quelconque t">$t_0$, $\delta$ est la dérive propre de l'horloge du récepteur, $\delta_{ts}$ représente une valeur de la dérive propre de l'horloge du leurre.

On notera également la relation suivante :

$$CB_{corr}(t") \approx (\delta_S(t") - \delta(t")) - (\delta_{tS}(t") - \delta(t"))$$ .

Dans un mode de réalisation particulier, la position du leurre est déterminée à partir de plusieurs récepteurs et en ce que la dérive estimée est déterminée par rapport au système de radionavigation GNSS.

On modélise le biais (constellation GNSS/récepteur) à partir de données obtenues avant que le leurre ne soit actif.

Dans un mode de réalisation particulier, le biais d'horloge corrigé correspond à l'équation : $CB_{jcorr}(t") = (\delta_s(t") - \delta_j(t")) - D_j(t"-t_0) - CBe_j(t_0)$ dans laquelle $\delta_s$ représente une valeur de la dérive de l'horloge du leurre perçue par le récepteur, $\delta_j$ est la dérive propre de l'horloge du j$^{ième}$ récepteur, $D_j$ est la dérive estimée de l'horloge du récepteur j vis-à-vis de la constellation GNSS à un instant quelconque t">$t_0$, $CBe_j(t_0)$ est la valeur connue du biais d'horloge délivré par le j$^{ième}$ récepteur à l'instant $t_0$ de début d'une attaque.

On notera également la relation suivante : $CB_{jcorr}(t") \approx (\delta_s(t")-\delta_j(t")) - (\delta t_{GNSS}(t")-\delta_j(t"))$ dans laquelle $\delta t_{GNSS}$ représente la dérive propre de l'horloge de la constellation.

Le biais (j$^{ième}$ récepteur/constellation GNSS) est modélisé de la manière suivante :
$CBe_j(t") = D_j.(t"- t_0) + CBe_j(t_0)$. $CBe_j(t")$ est le biais $\delta t_{GNSS}(t") - \delta_j(t")$ (récepteur j / constellation GNSS) estimé à l'instant t', $CBe_j(t_0)$ est une valeur connue du biais à $t_0$, $D_j$ est la dérive estimée de l'horloge du récepteur j vis-à-vis de la constellation GNSS à un instant quelconque t">$t_0$, $\delta t_{GNSS}$ représente la dérive propre de l'horloge de la constellation, $\delta_j$ représente la dérive propre de l'horloge du j$^{ième}$ récepteur.

Dans un mode de réalisation particulier, la localisation du leurre est réalisée à partir d'une méthode de multilatération, ladite méthode de multilatération étant adaptée pour traiter une différence temporelle de signaux, telle qu'une méthode TDOA.

La méthode de localisation TDOA (pour Time Différence Of Arrivai en anglais) consiste à calculer la différence entre des instants d'arrivées d'un signal en plusieurs points de mesure et à calculer le point source sur la base de ces retards différentiels. C'est une méthode simple et pratique qui permet de déterminer efficacement la position du leurre.

Dans un mode de réalisation particulier impliquant des plateformes mobiles, le procédé comprend une étape d'exploitation de mesures de Doppler pour améliorer la détermination de la position du leurre.

Dans un mode de réalisation particulier, le récepteur est mobile et la position du leurre est estimée à partir de mesures effectuées à différents instants.

Dans un mode de réalisation particulier, la position du leurre est estimée par plusieurs récepteurs à partir de mesures effectuées au même instant.

On notera que les récepteurs peuvent être fixes ou mobiles.

L'étape de détection de l'attaque par leurre comprend une étape de réception par le au moins un récepteur d'un signal d'entrée à un instant t', ledit signal d'entrée comportant des informations sur une horloge de l'émetteur dudit signal d'entrée. L'étape de détection de l'attaque comprend une étape de détermination d'une différence temporelle entre l'horloge du récepteur et l'horloge de l'émetteur dudit signal d'entrée à cet instant t', dite biais d'horloge déterminé.

On notera que l'étape de détermination de la différence temporelle est obtenue par une estimation de la dérive relative. Cette étape de détermination se fait à tout instant. La détection de l'attaque par leurre repose, par exemple, sur la détection d'un saut d'un biais d'horloge à un l'instant t' correspond à l'instant $t_0$ de début d'une attaque.

Dès qu'il est déterminé que l'émetteur est un leurre, le récepteur est orienté vers un autre système de radionavigation par satellites et/ou la mobilité du récepteur est gérée par un ensemble de capteurs mécaniques.

Un autre objet de l'invention concerne un dispositif de détermination de la position d'un leurre à partir d'au moins un récepteur, ledit récepteur étant adapté pour recevoir des signaux provenant de satellites d'un système de radionavigation GNSS, ledit récepteur et ledit système de radionavigation GNSS ayant chacun une horloge dite respectivement horloge du récepteur et horloge de référence. L'horloge du récepteur et l'horloge de référence présente une différence temporelle à un instant t dite biais d'horloge de référence. L'horloge du récepteur dérive dans le temps par rapport à l'horloge de référence. Le dispositif de détermination comprend un module de détection d'une attaque par leurre et un bloc de correction du biais d'horloge délivré par le récepteur dit biais d'horloge corrigé, ladite correction étant réalisée à partir d'une dérive estimée de l'horloge du récepteur. Le bloc de correction est adapté pour déterminer au moins trois biais d'horloge corrigés. Le dispositif de détermination comprend également un bloc de mesures différentielles à partir de biais d'horloge corrigés pour déterminer la position du leurre.

Ce dispositif de détermination est adapté pour être placé dans le récepteur ou dans un système de navigation exploitant les informations délivrées par le récepteur.

Un autre objet de l'invention concerne un système de navigation adapté pour exploiter les informations délivrées par au moins un récepteur, ledit système de navigation comprenant un dispositif de détermination de la position d'un leurre selon un des objets précédents.

Le système de navigation est, par exemple, embarqué sur un véhicule automobile autonome comprenant un récepteur GPS pour assister le conducteur ou pour gérer totalement le déplacement de ce véhicule.

Un autre objet de l'invention concerne un aéronef comprenant un dispositif de détermination de la position d'un leurre selon un des objets précédents.

Dans un mode de réalisation particulier, l'aéronef est un drone.

Dans un mode de réalisation particulier, le drone est un drone maître adapté pour communiquer avec une pluralité d'autres drones dit drones serviteurs.

Les drones embarquant les récepteurs sont collaboratifs et ils disposent d'un réseau de communication permettant d'échanger les informations.

Un autre objet de l'invention concerne un produit programme d'ordinateur comportant des instructions de programme exploitables par le dispositif de détermination de la position d'un leurre selon un des objets précédents, qui lorsqu'elles sont exécutées ou interprétées par ledit dispositif de détermination déclenchent la mise en œuvre du procédé pour la détermination de la position d'un leurre selon un des objets précédents.

La présente invention sera mieux comprise à la lecture de la description détaillée de modes de réalisation pris à titre d'exemples nullement limitatifs et illustrés par les dessins annexés sur lesquels :

[Fig 1] la figure 1 est une vue illustrant une attaque par leurre visant un récepteur ;

[Fig 2] la figure 2 est un schéma illustrant les différentes étapes d'un procédé pour la détermination de la position du leurre à partir du récepteur de la figure 1, selon un premier mode de réalisation de l'invention ;

[Fig 3] la figure 3 est un schéma illustrant un dispositif de détermination de la position d'un leurre pour une mise en œuvre du procédé de la figure 2.

[Fig 4] la figure 4 est une vue illustrant une attaque par leurre visant une pluralité de récepteurs ;

[Fig 5] la figure 5 est un schéma illustrant les différentes étapes d'un procédé pour la détermination de la position d'une leurre à partir des récepteurs de la figure 4, selon une second mode de réalisation de l'invention ;

[Fig 6] la figure 6 est un schéma illustrant un dispositif de détermination de la position d'un leurre pour une mise en œuvre du procédé de la figure 5.

Sur les différentes figures, les éléments identiques ou similaires portent les mêmes références.

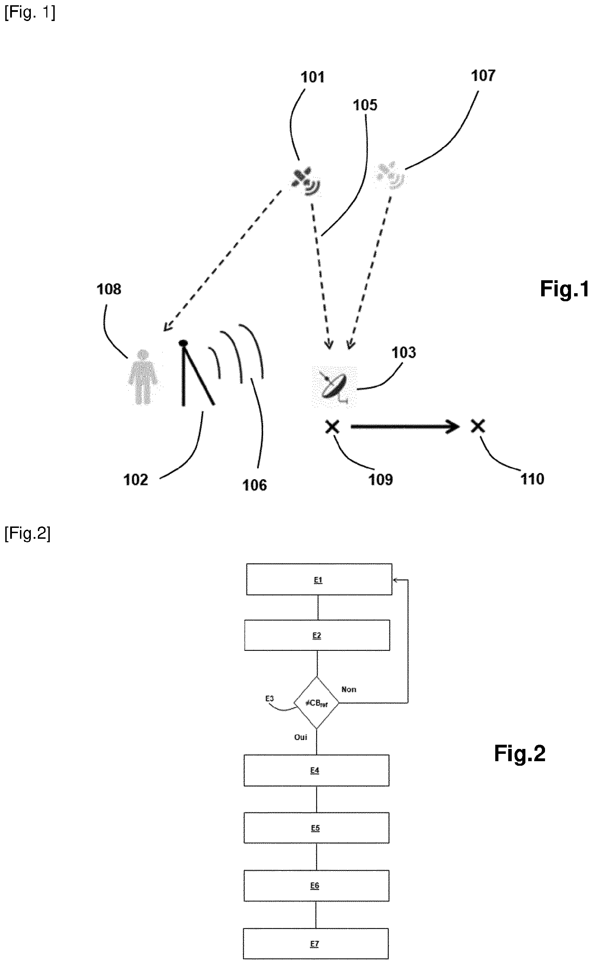

La figure 1 illustre une attaque par un leurre 102 à destination d'un récepteur 103. Le récepteur est ici placé dans un véhicule mobile. Le récepteur 103 est adapté pour recevoir un signal authentique 105 provenant d'un satellite 101 d'un système de radionavigation par satellites. Préférentiellement, le véhicule automobile est un véhicule automobile autonome. En variante, le récepteur 103 appartient à un aéronef, par exemple à un drone. Le signal authentique 105 permet au récepteur 103 de connaître la localisation réelle 109 du véhicule ou de l'aéronef portant ledit récepteur 103. Au cours de l'attaque, une personne malveillante 108 essaye de remplacer le signal authentique 105 par un signal d'entrée 106 malveillant au niveau du récepteur 103. Dans un type d'attaque, le signal malveillant 106 a une puissance supérieure au signal authentique 105 au niveau du récepteur 103. Dès lors, le signal authentique 105 est « étouffé » par le signal malveillant 106 et le récepteur 103 n'« entend »

plus que ce signal malveillant 106. Le signal malveillant 106 peut alors transmettre des informations erronées afin que le récepteur détermine une localisation factice 110 décalée par rapport à la localisation réelle 109.

La figure 2 illustre les différentes étapes d'un procédé pour la détermination de la position du leurre 102 à partir du récepteur 103, selon un premier mode de réalisation de l'invention.

Comme il a déjà été précisé, le récepteur 103 est adapté pour recevoir des signaux provenant d'une constellation de satellites 101 d'un système de radionavigation GNSS de référence. Ce récepteur 103 et cette constellation de satellites 101 possèdent chacun une horloge interne. Dans le cas de la constellation de satellites, l'horloge interne de cette constellation est également appelée horloge de référence. L'horloge du récepteur 103 et l'horloge de référence de la constellation de satellites 101 présentent une différence temporelle, dite biais d'horloge de référence ($CB_{ref}(t)$) déterminé à un temps t.

En outre, pour des raisons de coût de fabrication, l'horloge du récepteur est, en général, bien moins performante que l'horloge de référence de la constellation de satellites. Cette horloge du récepteur est alors sujette à des dérives relativement importantes dans le temps vis-à-vis de l'horloge de référence de la constellation de satellites.

Le procédé pour la détermination de la position du leurre 102 est illustré par la suite à partir de la figure 2.

Pour ce premier mode de réalisation de l'invention, les hypothèses sont les suivantes :

- le leurre 102 est un leurre cohérent ponctuel. Il représente une fausse constellation colocalisée en une position S fixe au sol ;
- le véhicule portant le récepteur est mobile et P(t) est la position du véhicule à un instant t ;
- la dérive de l'horloge du récepteur 103 par rapport à l'horloge de la constellation de satellites 101 est connue ou estimée et donc prévisible à court terme ;
- le biais d'horloge de référence $CB_{ref}(t)$, délivré par le récepteur avant l'attaque par leurre, à un temps t entre l'horloge du récepteur 103 et l'horloge de la constellation de satellites 101 est exprimé de la manière suivante :

$$CB_{ref}(t) = \left( \delta t_{GNSS}(t) - \delta(t) \right)$$

Dans lequel $\delta t_{GNSS}(t)$ représente la dérive propre de de l'horloge de la constellation de satellites 101 calculée à un instant t et $\delta(t)$ représente une valeur de la dérive propre de l'horloge du récepteur 103 audit instant t. Le biais d'horloge de référence $CB_{ref}(t)$ est donc déterminé à cet instant t. Il est délivré par le récepteur 103 à l'issu du calcul des informations PVT. Le biais d'horloge de référence correspond à une dérive relative qui est accessible, contrairement aux valeurs de dérives absolues.

On notera que si la dérive de l'horloge du récepteur 103 par rapport à l'horloge de la constellation de satellites 101 est connue ou estimée, il est possible de prédire à tout instant t'>t, la valeur de référence $CB_{ref}(t')$ où $CB_{ref}(t') = CB_{ref}(t) + \Delta_{tt'}$, avec $\Delta_{tt'}$ une variation du biais d'horloge entre t et t'. Cette variation du biais d'horloge est liée à la dérive relative de l'horloge 103 par rapport à l'horloge de la constellation de satellites 101.

A cet instant t', le récepteur 103 reçoit un signal d'entrée dans une étape de réception E1. Ce signal d'entrée comporte des informations sur l'horloge de l'émetteur de ce signal d'entrée.

Dans une étape E2, le récepteur réalise une détermination d'une différence temporelle entre l'horloge du récepteur et l'horloge de l'émetteur du signal d'entrée à cet instant t'. Cette différence temporelle, délivrée par le récepteur à l'issu du calcul PVT, est appelée biais d'horloge déterminé $CB_{det}(t')$.

Deux cas peuvent alors se présenter :

Premier cas : le signal d'entrée est un signal 105 provenant du satellite 101 et il n'y a donc pas d'attaque par leurre. Le biais d'horloge déterminé $CB_{det}(t')$ correspond au biais d'horloge de référence à l'instant t' : $CB_{ref}(t')$.

Deuxième cas : le signal d'entrée est un signal 106 provenant du leurre 102. Le biais d'horloge déterminé à cet instant t' est exprimé de la manière suivante :

$$CB_{det}(t') = \left(\delta_S(t') - \delta(t')\right)$$

Dans lequel $\delta_s(t')$ représente une valeur de la dérive de l'horloge du leurre 102 à un instant t' et $\delta(t')$ représente une valeur de la dérive propre de l'horloge du récepteur 103 audit instant t'.

Dans ce deuxième cas, $CB_{det}(t')$ est différent de $CB_{ref}(t')$ (ce qui caractérise une attaque par leurre). On notera que par la suite, le temps t' est appelé instant $t_0$ de début de l'attaque par leurre.

Pour tout instant t" depuis l'instant $t_0$ de début de l'attaque par leurre, le biais d'horloge délivré par le récepteur 103, à l'issu du calcul des informations PVT a pour expression :

$$CB(t'') = \left(\delta_S(t'') - \delta(t'')\right)$$

Dans le cas d'un leurre cohérent ponctuel, le terme $\delta_s(t'')$ est la somme d'une composante liée à une dérive propre $\delta t_s(t'')$ et d'une composante liée au temps de parcours leurre/récepteur (d(S, P(t"))/c, selon l'équation :

$$\delta_s(t'') = \frac{d(S,P(t''))}{c} + \delta t_s(t'')$$

Dans laquelle c correspond à la vitesse de la lumière.

Dans une étape E4, le récepteur 103 estime à chaque instant t" depuis la détection de l'attaque par leurre $t_0$, un biais estimé $\delta t_s(t'')-\delta(t'')$ de son horloge vis-à-vis de l'horloge du leurre 102. Ce biais est estimé selon l'équation :

$$\delta t_S(t'')-\delta(t'') \sim D.t'' + (\delta t_S(t_0)-\delta(t_0))$$

Dans laquelle, D correspond à une dérive estimée de l'horloge du récepteur par rapport à l'horloge du leurre 102. Cette dérive estimée est connue notamment si la dérive propre de l'horloge du récepteur par rapport à la constellation de satellites 101 est estimée avant la détection de l'attaque et la dérive de l'horloge du leurre (représentant une fausse constellation) par rapport à la vraie constellation est négligeable. C'est notamment le cas, lorsque l'horloge du leurre 102 est asservie à l'horloge de la constellation de satellites 101 ou soit estimée à partir de l'observation du biais d'horloge délivré par le récepteur.

Dans une étape E5, le procédé détermine un biais d'horloge corrigé $CB_{corr}(t'')$ en soustrayant au biais d'horloge délivré par le récepteur 103 le biais estimé $\delta t_s(t'')-\delta(t'')$ à l'étape E4. Ce biais d'horloge corrigé correspond à l'équation :

$$CB_{corr}(t'') = \left(\delta_S(t'') - \delta(t'')\right) - \left(\delta_{tS}(t'') - \delta(t'')\right)$$

Dans une étape E6, une position du leurre 102 est déterminée. Pour cela, le récepteur 103 différencie le biais d'horloge corrigé à l'instant t" avec le biais d'horloge corrigé à l'instant $t_0$, ce qui donne une mesure TDOA entre la position du leurre 102 et la position du véhicule à l'instant $t_0$ et à l'instant t" selon les équations :

$$CB_{corr}(t'') - CB_{corr}(t0) = \left(\delta_S(t) - \delta ts(t)\right) - \left(\delta_S(t0) - \delta ts(t0)\right)$$

$$CB_{corr}(t'') - CB_{corr}(t0) = \frac{d(S,P(t''))}{c} - \frac{d(S,P(t0))}{c}$$

$$CB_{corr}(t'') - CB_{corr}(t0) = TDOA_{t,t0}$$

Ces mesures différentielles, de type TDOA, réalisées à plusieurs instants, permettent la localisation du leurre en 2D ou 3D par un procédé quelconque de multilatération. La localisation par multilatération TDOA est une technique de localisation basée sur la mesure des temps d'arrivée d'ondes avec une vitesse de propagation connue.

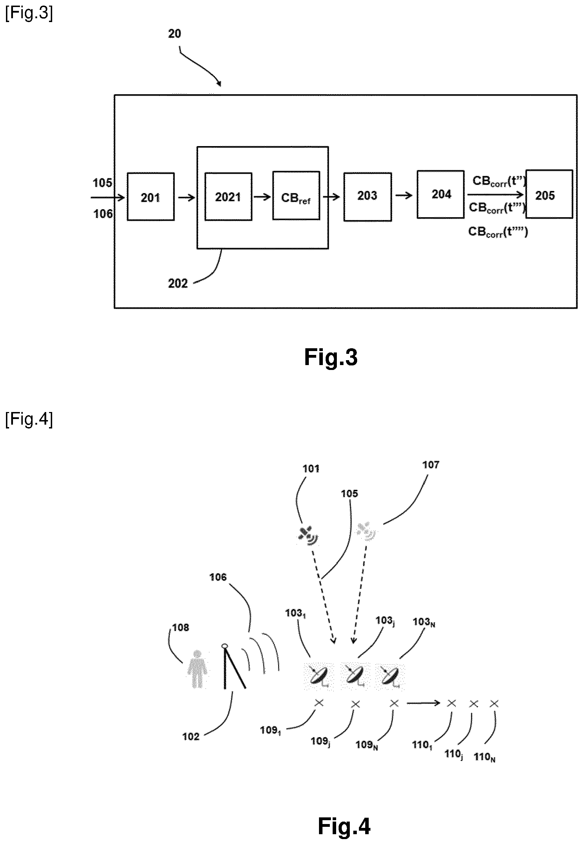

La figure 3 illustre un dispositif de détermination 20 de la position du leurre 102, ce dispositif étant adapté pour être placé soit dans le récepteur 103 soit dans le système de navigation de la plateforme exploitant les données PVT délivrées par le récepteur 103. Le dispositif de détermination 20 comprend une antenne 201 adaptée pour recevoir un signal 105 provenant de la constellation de satellites 101 ou un signal 106 provenant du leurre 102. Le dispositif de détermination 20 comprend également un module de détermination 202 d'une attaque par le leurre 102. Plus particulièrement, ce module de détermination 202 comprend un bloc 2021 de détermination d'une différence temporelle entre l'horloge du récepteur 103 et l'horloge de l'émetteur (satellite 101 ou leurre 102) à un instant t' dite biais d'horloge déterminé $CB_{det}(t')$ et si le biais d'horloge déterminé est différent du biais d'horloge de référence $CB_{ref}(t')$ alors l'émetteur est un leurre 102. L'instant t' correspond à l'instant $t_0$ de début de l'attaque. Le dispositif de détermination 20 comprend également un bloc d'estimation 203 de la dérive D de l'horloge du récepteur à partir des données du signal d'entrée 106 provenant du leurre 102 à un instant t". Ce signal d'entrée 106 comporte des informations sur l'horloge du leurre 102. Le dispositif de détermination 20 comprend, en outre, un bloc de détermination 204 du biais d'horloge entre le récepteur 103 et le leurre 102, dit biais d'horloge corrigé $CB_{corr}(t")$. Ce biais d'horloge corrigé est déterminé à partir du biais estimé $\delta t_s(t")-\delta(t")$ de l'horloge du récepteur 103. On notera que le bloc de détermination 204 est adapté pour déterminer d'autres biais d'horloge corrigés, par exemple un biais d'horloge corrigé $CB_{corr}(t''')$ à un temps t''' ou un biais d'horloge corrigé $CB_{corr}(t'''')$ à un temps t'''' avec t''''>t'''>t".

Enfin, le dispositif de détermination 20 comprend un bloc de mesures différentielles et de localisation 205 à partir des trois bais d'horloge corrigés $CB_{corr}(t")$, $CB_{corr}(t''')$, $CB_{corr}(t'''')$ pour déterminer la position du leurre 102.

Les figures 4, 5 et 6 illustrent un second mode de réalisation de l'invention. Dans ce second mode, les signaux de la constellation de satellites 101 sont reçus par une pluralité de récepteurs $103_1$,... $103j$, ... $103_N$.

La figure 4 illustre une attaque par un leurre 102 à destination d'une pluralité de récepteurs $103_1$,... $103j$, ... $103_N$. Les récepteurs sont par exemples placés dans un essaim de drones adaptés pour communiquer entre eux. Chaque récepteur $103_1$,... $103j$, ... $103_N$ est adapté pour recevoir un signal authentique 105 provenant d'un satellite 101 d'un système de radionavigation par satellites. Le signal authentique 105 permet aux récepteurs $103_1$,... $103j$, ...$103_N$ de connaître les localisations réelle $109_1$,... $109j$, ... $109_N$ des drones qui les transportent.

Au cours de l'attaque, une personne malveillante 108 essaye de remplacer le signal authentique 105 par un signal d'entrée 106 malveillant au niveau des récepteurs $103_1$,..., $103j$, ... $103_N$. Dans un type d'attaque, le signal malveillant 106 a une puissance supérieure au signal authentique 105 au niveau des récepteurs $103_1$,... $103j$, ... $103_N$. Dès lors, le signal authentique 105 est « étouffé » par le signal malveillant 106 et les récepteurs $103_1$,... $103j$, ... $103_N$ n'« entendent » plus que ce signal malveillant 106. Le signal malveillant 106 peut alors transmettre des informations erronées afin que les récepteurs $103_1$,... $103j$, ... $103_N$ déterminent des localisations factices $110_1$, $110j$, ... $110_N$ décalées par rapport aux localisations réelles $109_1$,..., $109j$, ... $109_N$.

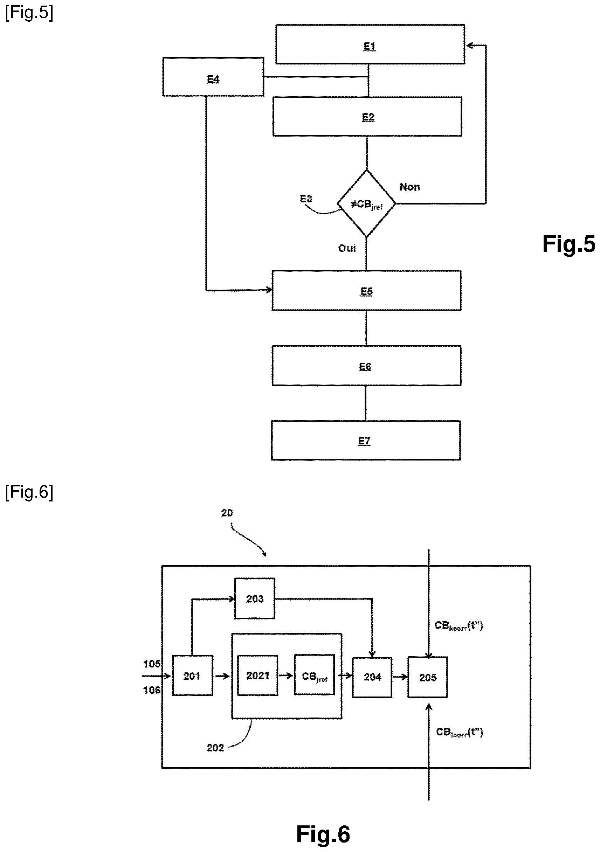

La figure 5 illustre les différentes étapes d'un procédé pour la détermination de la position du leurre 102 à partir d'un $j^{ième}$ récepteur $103_j$ de l'ensemble des récepteurs $103_1$,... $103_j$, ... $103_N$.

Comme il a déjà été précisé, le récepteur $103_j$ est adapté pour recevoir des signaux provenant d'une constellation de satellites 101 d'un système de radionavigation GNSS de référence. Ce récepteur $103_j$ et cette constellation de satellites 101 possèdent chacun une horloge interne. Dans le cas de la constellation de satellites 101, l'horloge interne de cette constellation est également appelée horloge de référence. L'horloge du récepteur $103_j$ et l'horloge de référence de la constellation de satellites 101 présentent une différence temporelle, dite biais d'horloge de référence ($CB_{jref}(t)$) déterminé à un temps t.

En outre, pour des raisons de coût de fabrication, l'horloge du récepteur est, en général, bien moins performante que l'horloge de référence de la constellation de satellites. Cette horloge du récepteur est alors sujette à des dérives relativement importantes dans le temps vis-à-vis de l'horloge de référence de la constellation de satellites 101.

Pour ce second mode de réalisation, les hypothèses sont les suivantes :

- le leurre 102 est un leurre cohérent ponctuel. Il représente une fausse constellation colocalisée en une position S fixe au sol ;
- il existe plusieurs récepteurs j, chaque récepteur étant porté par un drone mobile et $P_j(t)$ est la position du jième récepteur $103_j$ à un instant t ;
- la dérives $D_j$ de l'horloge du $j^{ième}$ récepteur $103_j$ par rapport à l'horloge de la constellation de satellites 101 est connue ou estimée avant l'attaque par leurre et prévisible à court terme ;
- le biais d'horloge de référence $CB_{jref}(t)$ entre l'horloge du $j^{ième}$ récepteur $103_j$ et l'horloge de la constellation de satellites 101, délivré par le récepteur à un instant t est exprimé de la manière suivante :

$$CB_{jref}(t) = (\delta t_{GNSS}(t) - \delta_j(t))$$

Dans lequel $\delta t_{GNSS}(t)$ représente la dérive propre de l'horloge de la constellation de satellites 101 à un instant $t$ et $\delta_j(t)$ est la dérive propre de l'horloge du $j^{ième}$ récepteur $103_j$ audit instant $t$. Le biais d'horloge de référence $CB_{jref}$ est donc déterminé à cet instant $t$. Il est délivré par le $j^{ième}$ récepteur $103_j$ à l'issue du calcul des informations PVT.

On notera qu'à tout instant $t' > t$ il est possible de déterminer un valeur de référence $CB_{jref}(t')$ tel que $CB_{jref}(t') = CB_{jref}(t) + \Delta_{tt'} = D_j.(t'-t)$, avec $\Delta_{tt'}$ une variation du biais d'horloge entre $t$ et $t'$. Cette variation du biais d'horloge est liée à la dérive de l'horloge du récepteur $103_j$ par rapport à l'horloge du satellite 101. Comme il a déjà été précisé, cette dérive est connue ou estimée et donc prévisible à court terme. On notera également que la dérive $D_j$ de l'horloge du récepteur 103 vis-à-vis de l'horloge de la constellation est estimée à partir des biais d'horloge délivrés par le récepteur dans une étape E4 qui est préalable à l'attaque par leurre. Cela permet de prédire la dérive relative du récepteur à chaque instant $t''$ selon l'équation :

$\delta_S(t'') - \delta(t'') = D_j(t''-t_0) + (\delta_S(t_0) - \delta_j(t_0))$ où $t_0$ correspond à l'instant de l'attaque par leurre 102.

A un instant $t' > t$, le récepteur $103_j$ reçoit un signal d'entrée dans une étape de réception E1. Ce signal d'entrée comporte des informations sur l'horloge de l'émetteur de ce signal d'entrée.

Dans une étape E2, le récepteur réalise une détermination d'une différence temporelle entre l'horloge du récepteur et l'horloge de l'émetteur du signal d'entrée à cet instant $t'$. Cette différence temporelle est appelée biais d'horloge déterminé $CB_{jdet}(t')$.

Deux cas peuvent alors se présenter :

Premier cas : le signal d'entrée est un signal 105 provenant du satellite 101. Le biais d'horloge déterminé $CB_{jdet}(t')$ correspond au biais d'horloge de référence à l'instant $t'$, $CB_{jref}(t')$, et il n'y a pas d'attaque par leurre.

Deuxième cas : le signal d'entrée est un signal 106 provenant du leurre 102. Le biais d'horloge délivré par le récepteur, à cet instant $t'$, a pour expression :

$$CB_{j\,det}(t') = \left( \delta_S(t') - \delta_j(t') \right)$$

Dans lequel $\delta_s(t')$ représente une valeur de l'horloge du leurre 102 perçue par le récepteur à un instant $t'$ et $\delta_j(t')$ représente une valeur de la dérive propre de l'horloge du $j^{ième}$ récepteur 103 audit instant $t'$.

Dans ce deuxième cas, $CB_{jdet}(t')$ est donc différent de $CB_{jref}(t')$ ce qui caractérise une attaque par leurre. On notera que par la suite, le temps $t'$ correspond à un instant $t_0$ de début de l'attaque par leurre.

Pour tout instant $t''$ depuis l'instant $t_0$ de début de l'attaque par leurre, il est possible d'exploiter le biais d'horloge délivré par le récepteur 103 par rapport au leurre 102 qui a pour expression :

$$CB_j(t'') = \left( \delta_S(t'') - \delta_j(t'') \right)$$

Dans le cas d'un leurre cohérent ponctuel, le terme $\delta_s(t'')$ est la somme d'une composante liée à une dérive propre $\delta t_s(t'')$ et d'une composante liée au temps de parcours leurre/récepteur $(d(S, P_j(t''))/c$, selon l'équation :

$$\delta_s(t'') = \frac{d(S, P_j(t''))}{c} + \delta t_s(t'')$$

Dans laquelle $c$ correspond à la vitesse de la lumière.

Dans une étape E5, le procédé détermine un biais d'horloge corrigé $CB_{jcorr}(t'')$ en soustrayant au biais d'horloge $CB_j(t'')$ délivré par le récepteur 103, la différence $(\delta t_{GNSS}(t'') - \delta_j(t))$ calculée à partir de la dérive $D_j$ estimée à l'étape E4. Ce biais d'horloge corrigé correspond aux équations suivantes :

$$CB_{jcorr}(t'') = CB_j(t'') - D_j(t''-t0) - (\delta t_{GNSS}(t0) - \delta_j(t0))$$

$$CB_{jcorr}(t'') \approx (\delta_S(t'') - \delta_j(t'') - (\delta t_{GNSS}(t'') - \delta_j(t'')))$$

avec

$$\left(\delta_S(t'') - \delta_j(t'') - (\delta t_{\mathrm{GNSS}}(t'') - \delta_j(t''))\right) = \frac{d(S, P_j(t''))}{c} + \delta t_S(t'') - \delta t_{\mathrm{GNSS}}(t'')$$

20Dans une étape E6, chaque drone transmet via le réseau de radiocommunication le biais d'horloge corrigé soit vers les autres drones (dans une architecture décentralisée) ou soit vers un drone maître (dans une architecture centralisée). Le drone maître ou chaque drone de l'essaim calcule des mesures de TDOA en différentiant les quantités précédentes entre récepteurs, par exemple, entre un récepteur j1 et un récepteur ji selon les équations suivantes :

$$CB_{j1corr}(t'') - CB_{jicorr}(t'') = \frac{d(S, P_{j1}(t''))}{c} - \frac{d(S, P_{ji}(t''))}{c} = TDOA_{j1,ji}$$

Ces mesures différentielles, de type TDOA permettent, sous réserve qu'au moins trois drones soient leurrés et transmettent les biais d'horloge corrigés, la localisation du leurre en 2D ou 3D par le procédé quelconque de multilatération.

Pour le premier mode de réalisation et pour le deuxième mode de réalisation, si les plateformes sont mobiles et se déplacent suffisamment vite, il est possible d'améliorer la détermination de la position du leurre 102 au cours d'une étape E7 d'exploitation de mesures de Doppler. Ces mesures de Doppler sont délivrées par le récepteur 103 ; $103_j$ soit directement soit déduites des vitesses radiales selon l'équation :

$$FOA_{t''} = Fe + \frac{Vr_{t''}}{c} Fe$$

Dans lequel Fe est la fréquence du signal reçu et $V_{rt''}$ la vitesse radiale au temps t''.

Le leurre étant supposé fixe, ici, le Doppler ne résulte que du déplacement du véhicule (premier mode de réalisation) ou du drone (second mode de réalisation).

Si le véhicule suit une trajectoire rectiligne uniforme, il est alors possible d'appliquer une localisation de type FDS (pour Frequency Doppler Shift en anglais), en effectuant éventuellement une manœuvre pour lever l'ambiguïté gauche droite.

La figure 3 illustre un dispositif de détermination 20 de la position du leurre 102, ce dispositif étant adapté pour être placé soit dans le récepteur 103 soit dans le système de navigation de la plateforme exploitant les données PVT délivrées par le récepteur. Le dispositif de détermination 20 comprend une antenne 201 adaptée pour recevoir un signal 105 provenant de la constellation de satellites 101 ou un signal 106 provenant du leurre 102. Le dispositif de détermination 20 comprend également un module de détermination 202 d'une attaque par le leurre 102. Plus particulièrement, ce module de détermination 202 comprend un bloc 2021 de détermination d'une différence temporelle entre l'horloge du récepteur 103 et l'horloge de l'émetteur (satellite 101 ou leurre 102) à un instant t' dite biais d'horloge déterminé $CB_{jdet}(t')$ et si le biais d'horloge déterminé est différent du biais d'horloge de référence $CB_{jref}(t')$ alors l'émetteur est un leurre 102. L'instant t' correspond à l'instant $t_0$ de début de l'attaque. Le dispositif de détermination 20 comprend également un bloc d'estimation 203 de la dérive $D_j$ de l'horloge d'un récepteur j à partir des données du signal d'entrée 105 provenant de la constellation de satellites 101 à un instant t''. Ce signal d'entrée 105 comporte des informations sur l'horloge de la constellation de satellites 101. Le bloc d'estimation 203 est disposé en parallèle du module de détermination 202. Ce bloc 203 est alimenté par l'antenne 201. Le dispositif de détermination 20 comprend, en outre, un bloc de détermination 204 du biais d'horloge entre le récepteur 103 et la constellation de satellites 101, dit biais d'horloge corrigé $CB_{jcorr}(t'')$. Ce biais d'horloge corrigé est déterminé à partir du biais estimée $\delta t_{GNSS}(t'') - \delta_j(t'')$ de l'horloge du récepteur fournie par le bloc d'estimation 203. Le bloc de détermination 204 est également adapté pour recevoir des biais d'horloge corrigés $CB_{kcorr}(t'')$, $CB_{lcorr}(t'')$ provenant d'autres drones.

Enfin, le dispositif de détermination 20 comprend un bloc de mesures différentielles et de localisation 205. Ce bloc 205 est adapté pour recevoir le biais d'horloge corrigé $CB_{jcorr}(t'')$ du j$^{ième}$ récepteur $103_j$. Ce bloc 205 est également adapté pour recevoir un biais d'horloge corrigé $CB_{kcorr}(t'')$ provenant d'un k$^{ième}$ récepteur $103_k$ et un biais d'horloge corrigé $CB_{lcorr}(t'')$ provenant d'un l$^{ième}$ récepteur $103_l$. A partir des biais d'horloge corrigés $CB_{jcorr}(t'')$, $CB_{kcorr}(t'')$, $CB_{lcorr}(t'')$, le bloc 205 détermine la position du leurre 102.

Un autre objet de l'invention concerne un produit programme d'ordinateur, dit également logiciel, comportant des instructions de programme exploitables par le dispositif de détermination 20 de la position du leurre 102, qui lorsqu'elles sont exécutées ou interprétées par le dispositif de détermination 20 déclenchent la mise en œuvre du procédé pour la détermination de la position du leurre 102 dans un véhicule ou un aéronef. Ce logiciel est, par exemple, introduit sous forme d'un « add-on » au niveau du récepteur ou dans un système de navigation de la plateforme exploitant les informations délivrées par le récepteur GNSS.

L'invention n'est pas limitée aux modes de réalisation et variantes présentées et d'autres modes de réalisation et variantes apparaîtront clairement à l'homme du métier.

Ainsi, l'invention est également adaptée si le leurre est mobile. A chaque cycle de mesure, la position du leurre sera déterminée, ce qui permettra de réaliser un véritable « tracking » de ce leurre.

Ainsi, il est possible de déterminer une attaque par leurre autrement que par une détection d'un saut du biais d'horloge.

**Revendications**

1. Procédé pour la détermination de la position d'un leurre (102) à partir d'au moins un récepteur (103 ; $103_1$,... 103j, ... $103_N$), ledit récepteur (103 ; $103_1$,... 103j, ... $103_N$) étant adapté pour recevoir des signaux (105) provenant de satellites (101) d'un système de radionavigation GNSS, ledit récepteur (103 ; $103_1$,... 103j, ... $103_N$) et ledit système de radionavigation GNSS ayant chacun une horloge dite respectivement horloge du récepteur et horloge de référence, ladite horloge du récepteur et ladite horloge de référence présentant une différence temporelle à un instant t dite biais d'horloge de référence ($CB_{ref}(t)$ ; $CB_{jref}(t)$), ladite horloge du récepteur dérivant dans le temps par rapport à l'horloge de référence, ledit procédé comprenant :

   - une étape de détection (E3) d'une attaque par leurre (102) ;
   - une étape de correction (E5) du biais d'horloge délivré par le récepteur (103, $103_1$,... 103j, ...103N) à un instant t", dit biais d'horloge corrigé ($CB_{corr}(t")$ ; $CB_{jcorr}(t")$), ladite correction étant réalisée à partir d'une dérive estimée (D ; $D_j$) de l'horloge du récepteur ;
   - une étape de mesures différentielles (E6) à partir d'au moins trois biais d'horloge corrigés ($CB_{corr}(t")$, $CB_{corr}(t''')$, $CB_{corr}(t'''')$) ; $CB_{jcorr}(t")$, $CB_{kcorr}(t")$, $CB_{lcorr}(t")$) pour déterminer la position du leurre (102).

2. Procédé selon la revendication 1, dans lequel la position du leurre est obtenue à partir d'un seul récepteur (103), ledit récepteur (103) étant mobile, et en ce que la dérive estimée (D) est déterminée par rapport à une horloge du leurre (102).

3. Procédé selon l'une quelconque des revendications 1 ou 2, dans lequel le biais d'horloge corrigé ($CB_{corr}(t")$) correspond à l'équation : $CB_{corr}(t") = (\delta_s(t")-\delta(t"))-D(t"-t_0)-CBe(t_0)$ , dans laquelle $\delta_s$ représente une valeur de la dérive de l'horloge du leurre (102) perçue par le récepteur (103), $\delta$ est la dérive propre de l'horloge du récepteur (103), $CBe(t_0)$ est la valeur connue du biais d'horloge délivré par le récepteur (103) à l'instant $t_0$ de début d'une attaque.

4. Procédé selon la revendication 1, dans lequel la position du leurre (102) est déterminée à partir de plusieurs récepteurs ($103_1$,... 103j, ...,$103_N$) et en ce que la dérive estimée ($D_j$) est déterminée par rapport au système de radionavigation GNSS.

5. Procédé selon l'une quelconque des revendications 1 ou 4, dans lequel le biais d'horloge corrigé ($CB_{jcorr}(t")$) correspond à l'équation : $CB_{jcorr}(t")=(\delta_s(t")-\delta_j(t"))-D_j(t"-t_0)-CBe_j(t_0)$ dans laquelle $\delta_s$ représente une valeur de la dérive de l'horloge du leurre (102) perçue par le récepteur (103), $\delta_j$ est la dérive propre de l'horloge du $j^{ième}$ récepteur ($103_j$), $CBe_j(t_0)$ est la valeur connue du biais d'horloge délivré par le $j^{ième}$ récepteur ($103_j$) à l'instant $t_0$ de début d'une attaque.

6. Procédé selon l'une quelconque des revendications 1 à 5, dans lequel l'étape de mesures différentielles (E6) est réalisée à partir d'une méthode de multilatération, ladite méthode de multilatération étant adaptée pour traiter une différence temporelle de signaux, telle qu'une méthode TDOA.

7. Procédé selon l'une quelconque des revendications 1 à 6, dans lequel ledit procédé comprend une étape (E7) d'exploitation de mesures de Doppler pour améliorer la détermination de la position du leurre (102).

8. Procédé selon l'une quelconque des revendications 1 à 7, dans lequel le récepteur (103) est mobile et la position du leurre (102) est estimée à partir d'au moins trois mesures effectuées à différents instants.

9.  Procédé selon l'une quelconque des revendications 4 à 8, dans lequel la position dudit leurre (102) est estimée à partir de mesures effectuées par plusieurs récepteurs ($103_1$,... 103j, ... $103_N$) au même instant.

10. Procédé selon l'une quelconque des revendications 1 à 9, dans lequel l'étape de détection de l'attaque par leurre (102) comprend :

    - une étape de réception (E1) par le au moins un récepteur (103 ; $103_1$,... 103j, ... $103_N$) d'un signal d'entrée (105, 106) à un instant t', ledit signal d'entrée (105, 106) comportant des informations sur une horloge de l'émetteur (101, 102) dudit signal d'entrée ;
    - une étape de détermination (E2) d'une différence temporelle entre l'horloge du récepteur et l'horloge de l'émetteur dudit signal d'entrée (105, 106) à cet instant t', dite biais d'horloge déterminé ($CB_{det}$(t') ; $CB_{jdet}$(t')) ;
    - si le biais d'horloge déterminé à cet instant t' est différent du biais d'horloge de référence à l'instant t' ($CB_{ref}$(t') ; $CB_{jref}$(t'), alors ledit émetteur est un leurre (102) et l'instant t' correspond à l'instant $t_0$ de début d'une attaque.

11. Procédé selon la revendication 10, dans lequel dès qu'il est déterminé que l'émetteur est un leurre (102), le récepteur (103 ; $103_1$,... 103j, ... $103_N$) est orienté vers un autre système de radionavigation par satellites (107) et/ou la mobilité du récepteur est gérée par un ensemble de capteurs mécaniques.

12. Dispositif de détermination de la position d'un leurre (102) à partir d'au moins un récepteur (103 ; $103_1$,... 103j, ...$103_N$), ledit récepteur (103 ; $103_1$,... 103j, ... $103_N$) étant adapté pour recevoir des signaux (105) provenant de satellites (101) d'un système de radionavigation GNSS, ledit récepteur (103 ; $103_1$,... 103j, ... $103_N$) et ledit système de radionavigation GNSS ayant chacun une horloge dite respectivement horloge du récepteur et horloge de référence, ladite horloge du récepteur et ladite horloge de référence présentant une différence temporelle à un instant t dite biais d'horloge de référence ($CB_{ref}$(t) ; $CB_{jref}$(t)), ladite horloge du récepteur dérivant dans le temps par rapport à l'horloge de référence, ledit dispositif de détermination (20) comprenant :

    - un module de détection (202) d'une attaque par leurre (102) ;
    - un bloc de correction (204) du biais d'horloge délivré par le récepteur (103 ; $103_1$,... 103j, ... $103_N$) dit biais d'horloge corrigé ($CB_{corr}$(t") ; $CB_{jcorr}$(t")), ladite correction étant réalisée à partir d'une dérive estimée (D ; $D_j$) de l'horloge du récepteur ;
    - un bloc de mesures différentielles (205) à partir d'au moins trois biais d'horloge corrigés ($CB_{corr}$(t"), $CB_{corr}$(t'''), $CB_{corr}$(t'''')) ; $CB_{jcorr}$(t"), $CB_{kcorr}$(t"), $CB_{lcorr}$(t")) pour déterminer la position du leurre (102).

13. Système de navigation adapté pour exploiter les informations délivrées par au moins un récepteur (103 ; $103_1$,... 103j, ... $103_N$)), ledit système de navigation comprenant un dispositif de détermination (20) de la position d'un leurre (102) selon la revendication 12.

14. Aéronef comportant un dispositif de détermination (20) de la position d'un leurre (102) selon la revendication 12.

15. Aéronef selon la revendication 14, dans lequel ledit aéronef est un drone.

16. Aéronef selon la revendication 15, dans lequel ledit drone est un drone maître adapté pour communiquer avec une pluralité d'autres drones dit drones serviteurs.

17. Produit programme d'ordinateur comportant des instructions de programme exploitables par le dispositif de détermination (20) de la position d'un leurre (102) de la revendication 12, qui lorsqu'elles sont exécutées ou interprétées par ledit dispositif de détermination (20) déclenchent la mise en œuvre du procédé pour la détermination de la position d'un leurre (102) selon l'une quelconque des revendications 1 à 11.

[Fig. 1]

Fig.1

[Fig.2]

Fig.2

[Fig.3]

Fig.3

[Fig.4]

Fig.4

[Fig.5]

Fig.5

[Fig.6]

Fig.6

Europäisches
Patentamt

European
Patent Office

Office européen
des brevets

**RAPPORT DE RECHERCHE EUROPEENNE**

Numéro de la demande

**EP 21 21 8224**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | BHAMIDIPATI SRIRAMYA ET AL: "GPS Multireceiver Joint Direct Time Estimation and Spoofer Localization", IEEE TRANSACTIONS ON AEROSPACE AND ELECTRONIC SYSTEMS, IEEE SERVICE CENTER, PISCATAWAY, NJ, US, vol. 55, no. 4, 1 août 2019 (2019-08-01), pages 1907-1919, XP011738847, ISSN: 0018-9251, DOI: 10.1109/TAES.2018.2879532 [extrait le 2019-08-07] * figures 3, 5, 7 * * équations (4)-(6) * * sections: I. Introduction; II. LS-MRDTE. * | 1-17 | INV. G01S19/21 G01S5/02 G01S5/06 |
| | ----- | | |
| A | SHANG SHUNSHUN ET AL: "A Novel Method for GNSS Meaconer Localization Based on a Space-Time Double-Difference Model", IEEE TRANSACTIONS ON AEROSPACE AND ELECTRONIC SYSTEMS, IEEE SERVICE CENTER, PISCATAWAY, NJ, US, vol. 56, no. 5, 13 février 2020 (2020-02-13), pages 3432-3449, XP011813961, ISSN: 0018-9251, DOI: 10.1109/TAES.2020.2974034 [extrait le 2020-10-08] * figure 1 * * équations (4), (6)-(7), (14) * * sections: I. Introduction; II. System Model; III. CRB for the Estimated Parameter. * | 1-3,8, 12,17 | DOMAINES TECHNIQUES RECHERCHES (IPC) G01S |
| | ----- | | |
| | -/-- | | |

Le présent rapport a été établi pour toutes les revendications

| Lieu de la recherche | Date d'achèvement de la recherche | Examinateur |
|---|---|---|
| Munich | 11 mai 2022 | Tancredi, Urbano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................
& : membre de la même famille, document correspondant

**EP 4 024 089 A1**

Europäisches Patentamt
European Patent Office
Office européen des brevets

# RAPPORT DE RECHERCHE EUROPEENNE

Numéro de la demande

**EP 21 21 8224**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Truong Victor: "DIGUE : Détection d'Interférences Gnss pour U.a.v autonomE", , 8 décembre 2020 (2020-12-08), XP055838277, Extrait de l'Internet: URL:https://tel.archives-ouvertes.fr/tel-03045956/document [extrait le 2021-09-06] * figures 45,58 * * sections: Introduction; II.5 Etude dans le cas d'un récepteur en déplacement; III.2 Proposition d'une stratégie anti-leurrage basée sur l'utilisation de drones en formation. * ----- | 1-3,5,8, 12,14-17 | |
| A | DEMPSTER ANDREW G ET AL: "Interference Localization for Satellite Navigation Systems", PROCEEDINGS OF THE IEEE, IEEE. NEW YORK, US, vol. 104, no. 6, 1 juin 2016 (2016-06-01), pages 1318-1326, XP011610452, ISSN: 0018-9219, DOI: 10.1109/JPROC.2016.2530814 [extrait le 2016-05-18] * tableau 1 * * sections: I. Introduction; II.D. Frequency Difference of Arrival (FDOA). * ----- | 1,6,7, 12,17 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 11 mai 2022 | Tancredi, Urbano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................
& : membre de la même famille, document correspondant

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2992069